# EUROPÄISCHE PATENTANMELDUNG

(11) **EP 0 573 857 A1**
(43) Veröffentlichungstag der Anmeldung: **15.12.1993**
(21) Anmeldenummer: 93108637.5
(22) Anmeldetag: 28.05.1993
(51) Int. Cl.: G01C 19/66, H01S 3/30

(54) **Brillouin-Ringlaserkreisel**

(30) Priorität: 09.06.1992 DE 4218905
(71) Anmelder: Bodenseewerk Gerätetechnik GmbH, D-88662 Überlingen (DE)
(72) Erfinder: Quast, Thomas, W-7770 Überlingen (DE); Raab, Michael, W-7770 Salem 3 (DE)
(74) Vertreter: Weisse, Jürgen, Dipl.-Phys. Patentanwalt

(57) **Zusammenfassung**

Brillouin-Ringlaser enthält einen Pumplaser (20), einen Resonatorring (34), faseroptische Kopplermittel zum Einkoppeln gegensinnig umlaufender Lichtwellen in den Resonatorring (34) mit einer die Ausbildung von Schallwellen in dem Resonatorring bewirkenden Intensität, derart, daß durch Brillouin-Streuung der Lichtwellen an den Schallwellen gegensinnig umlaufende Brillouin-Lichtwellen in dem Resonatorring (34) erzeugt werden, und Kopplermittel (32,10) zum Auskoppeln und Überlagern solcher gegensinnig im Resonatorring (34) umlaufender Brillouin-Lichtwellen an einem Detektor (26). Die faseroptischen Kopplermittel enthalten eine Faserschleife (18) mit einem ersten und einem zweiten Schenkel (14,16) die zwischen diesen Schenkeln (14,16) über einen Koppler (32) mit dem Resonatorring (34) gekoppelt ist. Die faseroptischen Kopplermittel enthalten weiterhin einen Sechstorkoppler (10), der den ersten und den zweiten Schenkel (14,16) der Faserschleife (18) mit einer von dem Laserlichtbündel beaufschlagten mittleren Pumpfaser (12) koppelt. Der erste und der zweite Schenkel (14,16) der Faserschleife (18) sind zu je einem Detektor (26,28) geführt. Die Detektorsignale sind auf eine richtungsbestimmende Schaltung (36-46) aufgeschaltet zur Erzeugung eines Richtungssignals aus der Phasenbeziehung der bei einer Drehbewegung des Resonatorringes (34) auftretenden Wechselstromkomponenten der Detektorsignale.

## Beschreibung

Die Erfindung betrifft einen Brillouin-Ringlaser enthaltend einen Pumplaser, einen Resonatorring, faseroptische Kopplermittel zum Einkoppeln gegensinnig umlaufender Lichtwellen in den Resonatorring mit einer die Ausbildung von Schallwellen in dem Resonatorring bewirkenden Intensität, derart, daß durch Brillouin-Streuung der Lichtwellen an den Schallwellen gegensinnig umlaufende Brillouin-Lichtwellen in dem Resonatorring erzeugt werden, und Kopplermittel zum Auskoppeln und Überlagern solcher gegensinnig im Resonatorring umlaufender Brillouin-Lichtwellen an einem Detektor.

Ein solcher Brillouin-Ringlaser ist durch die EP-B-0,104,942 bekannt.

Ringlaser dienen als inertiale Drehgeschwindigkeits-Sensoren. Infolge des Sagnac-Effektes wird bei einer Drehbewegung eines Ringlasers die Länge des Resonanzhohlraumes für rechtsherum und für linksherum umlaufendes Licht unterschiedlich. Dementsprechend ergeben sich dann für rechtsherum und linksherum laufendes Licht unterschiedliche Frequenzen des Ringlasers. Diese Frequenzen können überlagert und an einem Detektor zur Interferenz gebracht werden. Dann ergibt sich an dem Detektor ein Signal mit der Schwebungsfrequenz der beiden Frequenzen des Ringlasers. Diese Schwebungsfrequenz ist proportional zu der Drehgeschwindigkeit. Bei üblichen Ringlasern ergibt sich allerdings ein Bereich für kleine Winkelgeschwindigkeiten, in dem durch Rückstreuung der Ringlaser auf einer für beide Drehrichtungen gleichen Frequenz "einrastet".

Dieses "Einrasten" wird bei sog. "Brillouin"-Ringlasern vermieden. Bei denen werden von einem "Pumplaser" linksherum und rechtsherum laufende Lichtwellen in einen Ringresonator "hineingepumpt" werden. Bei einer bestimmten Energie der hineingepumpten Lichtwellen werden durch die Lichtwellen treten in dem Ringresonator Schallwellen auf, welche jeweils in der Richtung der Lichtwellen laufen. Die Schallwellen bringen Schwankungen des Brechungsindex und erzeugen Brillouin-Lichtwellen. Diese Brillouin-Lichtwellen sind an den Schallwellen gestreute Lichtwellen, die jeweils in entgegengesetzter Richtung laufen wie die Schallwellen und die Lichtwellen von dem Pumplaser und die gegenüber den Lichtwellen von dem Pumplaser einen Frequenzversatz aufweisen (US-A-4,159,178). Auch die so erzeugten, gegensinnig umlaufenden Brillouin-Lichtwellen unterliegen dem Sagnac-Effekt und können in der beschriebenen Weise zur Drehgeschwindigkeits-Messung benutzt werden.

Bei der EP-B-0,104,942 ist eine einzige, durchgehende Faserschleife vorgesehen. Die Faserschleife ist überkreuz geführt. Dadurch bildet der geschlossene Mittelteil der Faserschleife einen Resonatorring. Die Enden der Schleife sind durch einen ersten Viertor-Koppler zusammengeführt. Ein zweiter Viertor-Koppler koppelt Anfang und Ende des Resonatorrings. Das erste freie Ende der Faserschleife ist zu einem Pumplaser geführt. Das zweite freie Ende der Faserschleife führt zu einem Detektor. Über den ersten Viertor-Koppler wird Licht von dem Pumplaser aus em ersten Ende der Faserschleife in das zweite Ende eingekoppelt. Es wird dadurch Licht über beide Enden zu dem Resonatorring geführt. Das von den beiden Enden her zugeführte Licht durchläuft dann den Resonatorring gegensinnig. Es werden in der geschilderten Weise Brillouin-Lichtwellen erzeugt. Über den zweiten Koppler werden die Brillouin-Lichtwellen aus beiden Umlaufrichtungen wieder in je eines der Enden ausgekoppelt. Die ausgekoppelten Brillouin-Lichtwellen werden durch den ersten Koppler überlagert und erzeugen ein Schwebungssignal an dem Detektor.

Die bekannten Brillouin-Ringlaser liefern eine Schwebungsfrequenz, welche der Drehgeschwindigkeit proportional ist. Die Schwebungsfrequenz liefert jedoch nicht die Drehrichtung.

Durch die DE-A-3 805 904 ist ein interferometrisch arbeitender Faserkreisel mit einer Faserschleife bekannt, bei welchem ein Sechstorkoppler benutzt wird. Durch den Sechstorkoppler sind die beiden Enden der Faserschleife und eine Einspeisefaser für die Lichteinspeisung geführt. Die Einspeisefaser erhält Licht von einer Leuchtdiode. Die Enden der Faserschleife sind zu Photodioden geführt. Die Leuchtdiode erzeugt in dem Faserring über den Sechstorkoppler linksherum und rechtsherum laufende Lichtwellen. Die Photodioden sind, wieder über den Sechstorkoppler beide von diesen beiden Lichtwellen beaufschlagt. An den Photodioden entsteht dann eine Interferenz. Wenn der Faserring einer Winkelgeschwindigkeit um eine senkrecht zu seiner Ebene verlaufende Achse unterworfen ist, dann ändern sich infolge des Sagnac-Effektes die optischen Weglängen für die rechtsherum und die linksherum laufenden Lichtwellen gegensinnig. Damit verändern sich die Phasen der an der Photodiode interferierenden Lichtwellen und dadurch wieder die Lichtintensität. Diese Änderungen der Intensität verläuft an den an den beiden Enden des Faserringes angeordneten Photodioden gegensinnig und abhängig von der Drehrichtung, so daß man aus den relativen Intensitätsänderungen auf die Phasenänderung und damit auf die Drehgeschwindigkeit und die Drehrichtung schließen kann.

Bei dieser Anordnung handeltes sich nicht um einen Laser mit einer Resonanz. Es erfolgt keine Frequenzänderung sondern eine Phasenverschiebung des Lichtes. An dem Photodioden treten keine Wechselsignale auf.

Der Erfindung liegt die Aufgabe zugrunde, bei einem Brillouin-Ringlaser der eingangs genannten Art ein Richtungssignal zu gewinnen.

Erfindungsgemäß wird diese Aufgabe dadurch gelöst, daß
(a) die faseroptischen Kopplermittel einem ersten und einem zweiten Schenkel enthalten, die über einen Koppler mit dem Resonatorring gekoppelt sind,
(b) die faseroptischen Kopplermittel weiterhin einen Sechstorkoppler enthalten, der den ersten und den zweiten Schenkel mit einer von dem Laserlichtbündel beaufschlagten Pumpfaser koppelt,
(c) der erste und der zweite Schenkel zu je einem Detektor geführt sind und
(d) die Detektorsignale auf eine richtungserkennende Schaltung aufgeschaltet sind zur Erzeugung eines Richtungssignals aus der Phasenbeziehung der bei einer Drehbewegung des Resonatorringes auftretenden Wechselstromkomponenten der Detektorsignale.

Nach der Erfindung ist ein Sechstor-Koppler vorgesehen, über welchen die über eine gesonderte Faser zugeführten Lichtwellen von dem Pumplaser symmetrisch in die beiden Enden der Faserschleife eingekoppelt werden. Es sind zwei Detektoren an beiden Enden der Faserschleife vorgesehen. Es läßt sich zeigen, daß dann aus der Phasenbeziehung der an den beiden Enden der Faserschleife auftretenden Wechselsignale auf die Drehrichtung geschlossen werden kann.

Eine Ausgestaltung der Erfindung, die sich auf die Auswertung der Detektorsignale bezieht, ist Gegenstand des Patentanspruchs 2.

Ein Ausführungsbeispiel der Erfindung ist nachstehend unter Bezugnahme auf die zugehörigen Zeichnungen näher erläutert.
- Fig.1: zeigt einen Brillouin-Ringlaser mit Drehrichtungs-Bestimmung.
- Fig.2: zeigt die zugehörige Signalverarbeitung für die beiden Detektorsignale zur Erzeugung eines Drehrichtungssignals.

Der Brillouin-Ringlaser enthält einen Sechstor-Koppler 10. Der Sechstorkoppler 10 koppelt eine Pumpfaser 12 und zwei Schenkel 14 und 16 einer Faserschleife 18. Die Pumpfaser 12 ist zu einem Pumplaser 20 geführt. Die freien Enden 22 und 24 der Schenkel 14 bzw. 16 jenseits des Sechstor-Kopplers 10 sind zu je einem photoelektrischen Detektor 26 bzw. 28 geführt. Die Faserschleife 18 ist in ihrem Mittelteil 30 über einen Viertor-Koppler 32 mit einem Resonatorring 34 gekoppelt.

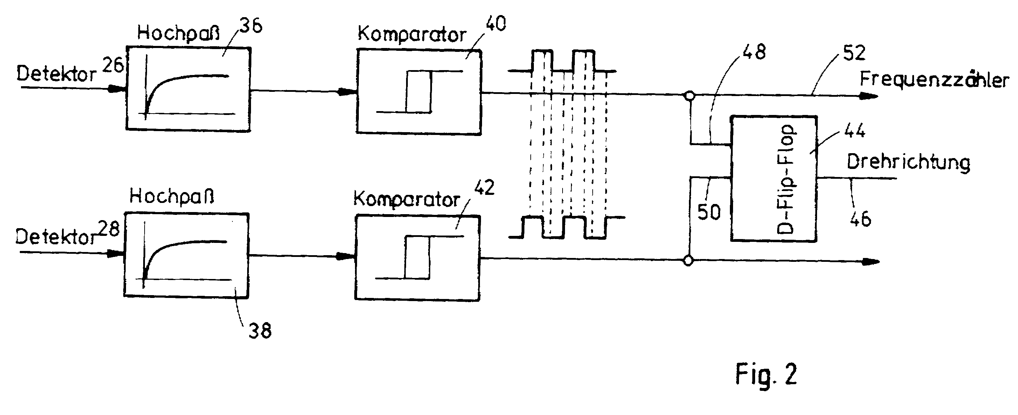

Die Signal der beiden Detektoren 26 und 28 sind auf je einen Hochpaß 36 bzw. 38 geschaltet. Dadurch werden mittelwertfreie Signale erzeugt. Diese Signale sind auf Komparatoren 40 bzw. 42 geschaltet. Die Komparatoren 40 und 42 erzeugen aus den sinusförmigen Signalen damit phasengleiche Rechtecksignale, wie in Fig.2 dargestellt ist. Die Rechtecksugnale sind auf ein D-Flip-Flop 44 geschaltet. Das D-Flip-Flop 44 übernimmt an seinem Ausgang 46 bei jeder steigenden Flanke des Rechtecksignals vom Detektor 26 den drehrichtungsabhängigen momentanen Zustand des Rechtecksignals vom Detektor 28. Das Rechtecksignal, das von dem Signal des Detektors 26 abgeleitet ist, liegt an einem Eingang 48 des D-Flip-Flops. Das Rechtecksignal, das von dem Signal des Detektors 28 abgeleitet ist, liegt an einem Eingang 50.

Die Impulsfolge, die von dem Komparator 40 geliefert wird, wird gleichzeitig an einem Ausgang 52 auf einen Zähler zur Bestimmung der Schwebungsfrequenz und damit der Drehgeschwindigkeit gegeben.

Die beschriebene Anordnung arbeitet wie folgt:
Die den Resonatrorring 34 verlassenden Lichtwellen haben Frequenzen v₁ und v₂ und Anfangsphasen φ₁ bzw. φ₂. Die Lichtwellen durchlaufen die Schenkel 16 bzw. 14 der Faserschleife 18 und werden durch den Sechstor-Koppler 10 sowohl in dem Ende 22 als auch in dem Ende 24 der Faserschleife 18 überlagert.

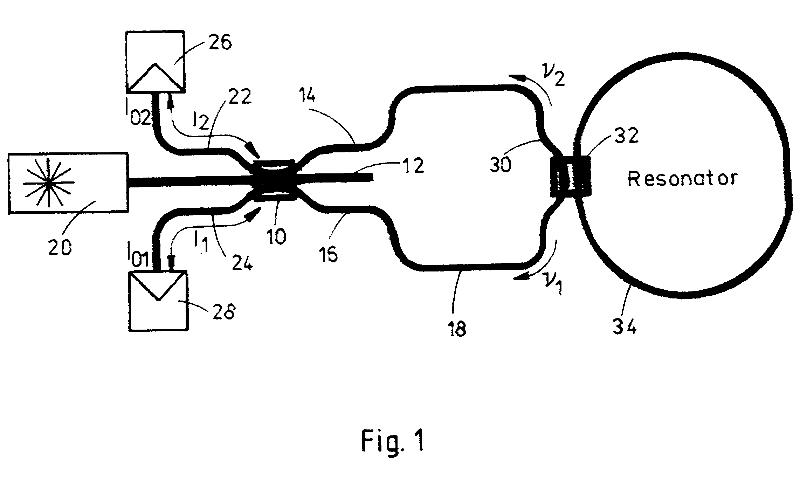

Der Koppelwinkel des symmetrischen Sechstor-Kopplers 10 von Faser zu Faser beträgt unter Berücksichtigung der Helizität (Uhrzeigersinn, Gegenuhrzeigersinn) im wesentlichen (unter Vernachlässigung des Verlustwinkels) 60°. Das bedeutet, daß zwischen der z.B. aus dem Schenkel 14 der Faserschleife 18 in das Ende 24 des Schenkels 16 eingekoppelten Lichtwelle der Frequenz v₂ eine Phasendifferenz gegenüber der in dem Schenkel 14 laufenden Lichtwelle der Frequenz v₂ besteht. Entsprechend besteht eine Phasendifferenz von 60° zwischen der in dem Sechstor-Koppler 10 aus dem Schenkel 16 in das Ende 22 eingekoppelten Lichtwelle der Frequenz v₁ und der in dem Schenkel 16 laufenden Lichtwelle dieser Frequenz v₁. Es tritt nun an dem Detektor 26 eine Interferenz auf zwischen der Lichtwelle der Frequenz v₂ ohne 60°-Phasenverschiebung und der eingekoppelten Lichtwelle mit der Frequenz v₁ mit der 60°-Phasenverschiebung. Bei einer Drehrichtung im Uhrzeigersinn in Fig.1 ist v₁ größer als v₂. Dann tritt an dem Detektor 26 ein Wechselsignal mit der Schwebungsfrequenz v₁ - v₂ auf. Das Signal hat eine Phasennacheilung von 60°, dem Koppelwinkel φₖ, gegenüber einem hypothetischen Signal, das durch Interferenz von Lichtwellen aus den Schenkeln 14 und 16 ohne Überkopplung durch den Sechstor-Koppler 10 entstehen würde. An dem Detektor 28 tritt ein Wechselsignal ebenfalls mit einer Schwebungsfrequenz v₁ - v₂ auf. Dieses Signal zeigt jedoch gegenüber dem vorerwähnten hypothetischen Signal eine Phasenvoreilung von 60° oder dem Koppelwinkel φₖ. Phasenverschoben ist nämlich jetzt die Lichtwelle mit der Frequenz v₂ aud dem Schenkel 14. Wenn bei einer Drehgeschwindigkeit entgegen dem Uhrzeigersinn in Fig.1 v₂ größer als v₁ ist, dann ergibt das Detektorsignal mit der Schwebungsfrequenz v₂ - v₁ am Detektor 26 eine Phasenvoreilung und das Detektorsignal mit der Schwebungsfrequenz v₂ - v₁ am Detektor 28 eine Phasennacheilung. Zwischen den Detektorsignalen der Detektoren 26 und 28 besteht daher eine Phasendifferenz von plus oder minus 120° oder 2φₖ, abhängig von der Drehrichtung der gemessenen Drehgeschwindigkeit. Nimmt man eines der beiden Detektorsignale als Referenz, dann ist, abhängig von der Drehrichtung z.B. im Zeitpunkt des ansteigenden Nulldurchganges dieses Detektorsignals das andere Detektorsignal entweder positiv oder negativ. Das liefert ein Drehrichtungssignal.

Das Drehrichtungssignal wird aus den Detektorsignalen mit der Schaltung nach Fig.2 erzeugt. Bei dem Übergang des Rechtecksignals von dem Komparator 40 von L nach H ist der Zustand des Rechtecksignals am Komparator 42 "H". Dadurch wird der Ausgang 46 des D-Flip-Flops 44 in den Zustand H geschaltet. Bei der entgegengesetzten Drehrichtung ist das Rechtecksignal am Komparator 42 zum Zeitpunkt des Überganges des Rechtecksignals vom Komparator 40 im Zustand "L". Dann geht der Ausgang 46 des D-Flip-Flops 44 in den Zustand L.

## Patentansprüche

1. Brillouin-Ringlaser enthaltend einen Pumplaser (20), einen Resonatorring (34), faseroptische Kopplermittel (10,12,18,32) zum Einkoppeln gegensinnig umlaufender Lichtwellen in den Resonatorring (34) mit einer die Ausbildung von Schallwellen in dem Resonatorring bewirkenden Intensität, derart, daß durch Brillouin-Streuung der Lichtwellen an den Schallwellen gegensinnig umlaufende Brillouin-Lichtwellen in dem Resonatorring (34) erzeugt werden, und Kopplermittel (32,10) zum Auskoppeln und Überlagern solcher gegensinnig im Resonatorring (34) umlaufender Brillouin-Lichtwellen an einem Detektor (26), **dadurch gekennzeichnet, daß**
(a) die faseroptischen Kopplermittel einem ersten und einem zweiten Schenkel (14,16) enthalten, die zwischen diesen Schenkeln (14,16) über einen Koppler (32) mit dem Resonatorring (34) gekoppelt sind,
(b) die faseroptischen Kopplermittel weiterhin einen Sechstorkoppler (10) enthalten, der den ersten und den zweiten Schenkel (14,16) mit einer von dem Laserlichtbündel beaufschlagten Pumpfaser (12) koppelt,
(c) der erste und der zweite Schenkel (14,16) zu je einem Detektor (26,28) geführt sind und
(d) die Detektorsignale auf eine richtungserkennende Schaltung (36-46) aufgeschaltet sind zur Erzeugung eines Richtungssignals aus der Phasenbeziehung der bei einer Drehbewegung des Resonatorringes (34) auftretenden Wechselstromkomponenten der Detektorsignale.

2. Brillouin-Ringlaser nach Anspruch 1, **dadurch gekennzeichnet, daß**
(a) die richtungserkennende Schaltung zwei Kanäle enthält, auf die je eines der Detektorsignale aufgeschaltet ist,
(b) jeder der Kanäle einen Hochpaß (36,38) und einen Komparator (40,42) zur Umwandlung der Detektorsignale in dazu phasengleiche Rechtecksignale enthält und
(c) die Rechtecksignale auf ein D-Flip-Flop (44) aufgeschaltet sind, das bei jeder steigenden Flanke des einen Detektorsignals den drehrichtungsabhängige Zustand des anderen Detektorsignals als Vorzeichensignal übernimmt.
